# EUROPÄISCHE PATENTANMELDUNG

(11) **EP 0 770 786 A1**
(43) Veröffentlichungstag der Anmeldung: **02.05.1997**
(21) Anmeldenummer: 96810683.1
(22) Anmeldetag: 11.10.1996
(51) Int. Cl.: F16B 39/16

(54) **Schraubensicherung**

(30) Priorität: 27.10.1995 DE 19540051
(71) Anmelder: ASEA BROWN BOVERI AG, 5401 Baden (CH)
(72) Erfinder: Meylan, Pierre, 5432 Neuenhof (CH)
(74) Vertreter: Weibel, Beat

(57) **Zusammenfassung**

Bei einer Schraubensicherung für eine Schraube (1), mit der ein erstes Bauteil (2a) und ein zweites Bauteil (2b) verspannt sind, wird eine Büchse (5a, 5b), bei der ein Zylinder (5a) mit einem durchbohrten Boden (5b) versehen ist, in einer ersten Bohrung (3a) des ersten Bauteils (2a) angeordnet. Die erste Bohrung (3a) mündet in eine kleinere zweite Bohrung (3b) des ersten Bauteils (2a), und diese zweite Bohrung (3b) ist mit einem Linksgewinde (8) versehen, in welchem ein Rohransatz (5c) verschraubt ist, der konzentrisch zur Bohrung im Boden (5b) an dessen Aussenseite angeordnet ist. Durch die Büchse (5a, 5b) und den Rohransatz (5c) hindurch ist die Schraube (1) mit ihrem Rechtsgewinde (7) in dem zweiten Bauteil (2b) verschraubt. Ein Deckel (6a), mit einer Nuss (6b), die formschlüssig mit dem Schraubenkopf verbunden ist, ist mittels einer Schweissraupe (4) an der Büchse (5a, 5b) befestigt.

## Beschreibung

### TECHNISCHES GEBIET

Die Erfindung betrifft eine Schraubensicherung, wie sie im Oberbegriff des Anspruchs beschrieben ist.

### STAND DER TECHNIK

Bei einer fest angezogenen Schraube liegen die Gewindegänge einseitig an. Da Schrauben selbsthemmend sind, verhindert die an der Gewindeanlagefläche auftretende Reibung das Lösen. Wird die Vorspannung infolge von Schlupf gleich Null, so hört die Anpressung im Gewinde auf, und die Schraube kann sich lösen. Bei Stössen und Schwingungen kann diese Grenze erreicht werden. Für diesen Fall verwendet man bei Schraubenverbindungen Sicherungselemente, die den Punkt der Grenzverschiebung, der bei Überschreitung der Biegewiderstände der Schraube (Schlupf) eintritt, soweit erhöht, dass er unter den Bedingungen der Praxis nicht mehr überschritten wird.

Losdrehsicherungen verhindern jegliches selbständiges Lösen und erhalten über 80% der Vorspannkraft. Entsprechend den unterschiedlichen Anforderungen am Einsatzort, werden verschiedene Losdrehsicherungen eingesetzt. Dabei umfassen diese Anforderungen sowohl die dynamischen und thermischen Belastungen als auch die daraus erwachsenen Bedingungen für die Materialwahl der zu verspannenden Bauteile und der Schraubenverbindung.

So sind beispielsweise Sperrzahnschrauben und -muttern nur dort einsetzbar, wo hoch vorgespannte Schraubenverbindungen überwiegend senkrecht zur Schraubenachse beansprucht werden und keine gehärteten Oberflächen der zu verspannenden Bauteile vorhanden sind.

Dagegen ist mikroverkapselter Klebstoff auch bei gehärteten Oberflächen anwendbar. Hier schränkt allerdings die Temperaturgrenze des verwendeten Klebstoffs den Anwendungsbereich ein und es ist zu beachten, dass während der Montage die Klebeflächen fettfrei sind.
Desweiteren kommen formschlüssige, mitverspannte Scheiben mit Lappen oder Aussennasen als Losdrehsicherungen zum Einsatz. Ihr Einsatzbereich ist begrenzt auf untere Festigkeitsklassen von Schrauben.

Auch nicht lösbare Losdrehsicherungen in Form von Schweisspunkten oder -raupen gelangen zur Anwendung. Hierbei werden die Köpfe der vorgespannten Schrauben direkt mit dem verspannten Bauteil verschweisst. Eine Voraussetzung für die Anwendung dieser Sicherung ist die Schweissbarkeit der verwendeten Schrauben- und Bauteilmaterialien. Gewöhnlich sind nur nicht hochfeste Legierungen schweissbar unter Raumbedingungen. Hochfeste Legierungen hingegen sind meist nur schlecht schweissbar unter Berücksichtigung kosten- und zeitintensiver Aufwendungen für spezielle Schweissbedingungen, Vorwärm- und Abkühlvorgänge. Diese Aufwendungen sind besonders dann nötig, wenn aufgrund der dynamischen und thermischen Betriebszustände sowohl die zu verspannenden Bauteile als auch die Schraubenverbindung aus hochfestem, schlecht schweissbarem Material bestehen.

Vergleichsweise einfacher ist die Sicherung schweissbarer Schrauben an schlecht schweissbaren Bauteilen, falls die Betriebszustände den Einsatz solcher Schrauben erlauben. In diesem Fall wird eine am Bauteil formschlüssige, schweissbare Scheibe mitverspannt, und anschliessend mit dem Schraubenkopf verschweisst.

### DARSTELLUNG DER ERFINDUNG

Der Erfindung liegt die Aufgabe zugrunde, eine Schraubensicherung der eingangs genannten Art dahingehend weiterzuentwickeln, dass mit ihr schlecht oder nicht schweissbare Schrauben und Grundwerkstoffe in einfacher und wirtschaftlicher Weise nichtlösbar gesichert werden können.

Erfindungsgemäss wird diese Aufgabe durch die Merkmale des Anspruchs gelöst.

Die Vorteile der Erfindung sind unter anderem darin zu sehen, dass ein Entfernen der Schraubensicherung möglich ist, wobei weder die Schraubenverbindung noch die verspannten Bauteile Schaden nehmen. Dieser Vorteil ist besonders bei Verwendung hochfester und damit vergleichsweise teurer Legierungen bedeutungsvoll.

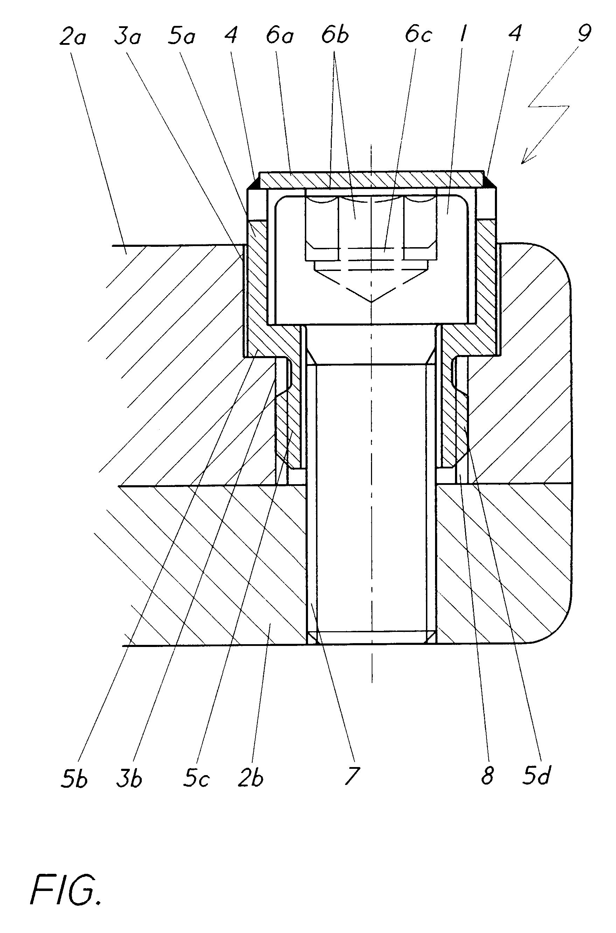

### KURZE BESCHREIBUNG DER ZEICHNUNG

In der Zeichnung ist ein Ausführungsbeispiel der Erfindung schematisch dargestellt.
- Die einzige Fig. zeigt:: einen Längsschnitt durch eine Schraubenverbindung mit nicht lösbarer Schraubensicherung.

Es sind nur die für das Verständnis der Erfindung wesentlichen Elemente gezeigt.

### WEG ZUR AUSFÜHRUNG DER ERFINDUNG

In der einzigen Fig. bezeichnet 1 eine Schraube mit einem Innensechskant 6c, die ein erstes Bauteil 2a mit einem zweiten Bauteil 2b verspannt, und welche mit einer Schraubensicherung 9 nicht lösbar gesichert ist.

Das erste Bauteil 2a weist eine erste Bohrung 3a und eine zweite Bohrung 3b auf, welche konzentrisch zur ersten Bohrung 3a angeordnet ist. Die zweite Bohrung 3b hat einen kleineren Durchmesser als die erste Bohrung 3a und ist mit einem Linksgewinde 8 versehen. In diesem Linksgewinde 8 der zweiten Bohrung 3b ist ein Rohransatz 5c verschraubt, der mit einem durchbohrten Boden 5b einer Büchse 5a, 5b verbunden ist. Die Bohrung im Boden 5b ist gleich gross wie der Innendurchmesser des Rohransatzes 5c, und sein Aussendurchmesser ist kleiner als der des Bodens 5b. Die Büchse 5a, 5b umfasst neben dem Boden 5b noch einen Zylinder 5a, der sich mit dem Boden 5b in der ersten Bohrung 3a des ersten Bauteils 2a abstützt. Durch die Büchse 5a, 5b und den Rohransatz 5c wird die Schraube 1 mit ihrem Rechtsgewinde 7 im Bauteil 2b fest verschraubt. Formschlüssig ist im Innensechskant 6c der Schraube 1 eine Nuss 6b eingesetzt, die mit einem die Büchse 5a, 5b verschliessenden Deckel 6a verbunden ist. Dieser Deckel 6a wird mittels einer Schweissraupe 4 nicht lösbar an der Büchse 5a, 5b befestigt.

Die so geschaffene Schraubensicherung 9 stellt eine Kombination aus den Sicherungsarten kraftschlüssig, formschlüssig und nicht lösbar dar. Beide Gewinde, das Rechtsgewinde 7 der Schraube 1 und das Linksgewinde 5d des Rohransatzes 5c, stellen kraftschlüssige Verbindungen mit den Bauteilen 2a und 2b dar. Die Nuss 6b mit Deckel 6a sitzt formschlüssig im Innensechskant 6c der Schraube 1 und ist nicht lösbar mit dem Zylinder 5a verschweisst. Durch den Einsatz dieses Deckel 6a mit Nuss 6b werden das Rechtsgewinde 7 mit dem Linksgewinde 8 gegenseitig hemmend fixiert.

Anwendung findet diese Art von Schraubensicherung 9 überall dort, wo die auftretenden Betriebsbedingungen eine spezielle Materialwahl für die zu verspannenden Bauteile 2a, 2b und für die Schraube 1 erfordern. So bedingen beispielsweise hohe Temperaturen und mechanische Vibrationen mit Torsions- und Schubbeanspruchung für eine Schraubenverbindung bei gleichzeitig auftretenden Schwankungen der Zustandsgrössen die Verwendung hochfester Metallegierungen sowohl für die zu verspannenden Bauteile 2a, 2b wie für die Schraube 1. Diese hochfesten Metallegierungen sind in der Regel nur mit grossem, vergleichsweise teurem Aufwand unter atmosphärischen Bedingungen schweissbar. Für die erfindungsgemässen Schraubenverbindung 9 werden Metallegierugen verwendet, die einfach und damit preiswert unter Raumbedingungen schweissbar sind.

Somit werden durch die beschriebene Kombination verschiedener Metallegierungen, die geforderte hohe Festigkeit der Bauteile 2a, 2b und der Schraube 1 mit den geschätzten Eigenschaften einer nicht lösbaren Schraubensicherung 9 unter Berücksichtigung der Wirtschaftlichkeit verbunden.
Ein weiterer Vorteil ist, dass bei einem Öffnen der Schraubensicherung 9 an der Schweissraupe 4 weder ein Bauteil 2a, 2b noch die Schraube beschädigt wird.

Selbstverständlich ist die Erfindung nicht auf das gezeigte und beschriebene Ausführungsbeispiel beschränkt. So ist die nicht lösbare Schraubensicherung 9 beispielsweise auch an allen zu verspannenden Bauteilen 2a, 2b und Schrauben 1 einsetzbar, die aus nicht schweissbaren Materialien gefertigt sind. Ebenfalls denkbar im Sinn der Erfindung ist ein Schraubenkopf mit einem Aussensechskant und ein entsprechendes, formschlüssiges Gegenstück 6b am Deckel 6a.

### BEZUGSZEICHENLISTE

- 1: Schraube
- 2a: erstes Bauteil
- 2b: zweites Bauteil
- 3a: erste Bohrung
- 3b: zweite Bohrung
- 4: Schweissraupe
- 5a: Zylinder
- 5b: Boden
- 5c: Rohransatz
- 5d: Linksgewinde
- 6a: Deckel
- 6b: Nuss
- 6c: Innensechskant
- 7: Rechtsgewinde
- 8: Linksgewinde
- 9: Schraubensicherung

## Patentansprüche

1. Schraubensicherung für eine Schraube (1), mit der ein erstes Bauteil (2a) und ein zweites Bauteil (2b) verspannt sind, dadurch gekennzeichnet,
- dass eine Büchse (5a, 5b), bei der ein Zylinder (5a) mit einem durchbohrten Boden (5b) versehen ist, in einer ersten Bohrung (3a) des ersten Bauteils (2a) angeordnet ist,
- dass die erste Bohrung (3a) in eine kleinere zweite Bohrung (3b) des ersten Bauteils (2a) mündet, und dass diese zweite Bohrung (3b) mit einem Linksgewinde (8) versehen ist, in welchem ein Rohransatz (5c) verschraubt ist, der konzentrisch zur Bohrung im Boden (5b) an dessen Aussenseite angeordnet ist,
- dass in der Büchse (5a, 5b) der Schraubenkopf einer Schraube (1) angeordnet ist, die durch den Rohransatz (5c) hindurch mit ihrem Rechtsgewinde (7) in dem zweiten Bauteil (2b) verschraubt ist,
- dass ein Deckel (6a) mittels einer Schweissraupe (4) an der Büchse (5a, 5b) befestigt ist, wobei der Deckel eine Nuss (6b) aufweist, die formschlüssig mit dem Schraubenkopf verbunden ist.
